# EUROPEAN PATENT SPECIFICATION

(11) **EP 3 197 740 B1**
(45) Date of publication and mention of the grant of the patent: **30.03.2022**
(21) Application number: 15845419.9
(22) Date of filing: 25.09.2015
(51) Int. Cl.: B61B 7/00, B60L 5/00

(54) **METHOD AND DEVICE FOR PROVIDING ENERGY TO SYSTEMS ON A CHAIRLIFT**
VERFAHREN UND VORRICHTUNG ZUR BEREITSTELLUNG VON ENERGIE AN SYSTEME AUF EINEM SESSELLIFT
PROCÉDÉ ET DISPOSITIF DE FOURNITURE D'ÉNERGIE À DES SYSTÈMES SUR UN TÉLÉSIÈGE

(30) Priority: 25.09.2014 US 201462055358 P
(43) Date of publication of application: 02.08.2017
(73) Proprietor: Alpine Media, Centennial, CO 80015 (US)
(72) Inventor: CONNORS, Jeffrey, Centennial, CO 80016 (US); PEYERL, Freddie, Centennial, CO 80015 (US); VENDEKEMP, Gerrit, Centennial, CO 80015 (US)
(74) Representative: HGF
(86) International application number: PCT/US2015/052396
(87) International publication number: WO 2016/049550

(56) References cited:
- EP-A1- 0 968 873
- EP-A1- 1 167 112
- CH-A1- 701 450
- FR-A1- 2 934 833
- JP-A- H0 993 705
- JP-A- 2003 048 532
- US-A1- 2008 282 928
- US-A1- 2012 103 225
- US-B2- 7 389 729
- US-B2- 8 467 829
- US-B2- 8 707 869
- None

## Description

### Field Of The Invention

The methods and systems disclosed herein relate to providing energy to one or more components.

### Priority

This application claims the benefit of priority of Provisional Application Serial No. 62/055,358, which was filed on September 25, 2014.

### Background

In certain industries, unpowered vehicles such as chairlifts and certain amusement park rides transport individuals from one place to another place. Such vehicles are typically attached to a system that moves the vehicles from place to place, while the vehicles themselves are merely shells to provide space to carry the individuals. In some instances, the vehicles carry radios or other low energy systems that can be powered by batteries that are charged over a long period of time prior to use. In these industries, the vehicles are in constant motion and cannot be taken out of service to recharge batteries during periods when they are in use-periods that can last for up to 10 hours or longer. US 2012/0103225 A1 discloses an aerial cable car system including transportation operating equipment for passenger and/or freight transport, wherein electrical consumers are connected for operation thereof to a rechargeable electrical energy store of a transportation operating equipment by a respective power circuit. The transportation operating equipment includes an operating control device connected to measuring devices for dynamically capturing measurement values based on available quantity of energy in the energy store. The operating control device includes a storage module having at least one stored measurement control value and an associated control parameter. The operating control device includes a filter module comparing a captured measurement value to the at least one stored measurement control value and reading out corresponding stored control parameter, based on which power circuits can be selectively coupled or decoupled to the energy store by the operating control device. Electrical consumers in transportation operating equipment can be fed without interruption by the energy store, even during travel. An example of a chairlift and a rapid-charging device is known from CH 701 450 A1.

Nevertheless, there are many applications in which present batteries are insufficient. For instance, media systems comprising LCD screens require a tremendous amount of power. In addition, systems that stream media require energy sources with high energy storage capacity. Such systems require a device that can deliver the energy necessary to run these devices. However the device would also need to be charged rapidly in an environment where long periods for recharging are not available, such as in the case of a chairlift or an amusement park ride.

Therefore, there remains a need for a device that can charge rapidly, while having the energy storage capacity to deliver large amounts of energy to systems.

### Summary

The invention is defined by the technical features set forth in the chairlift and device of claim 1 and in the method of claim 13, with additional features thereof being disclosed in the dependent claims.

Disclosed herein are devices that are capable of providing large amounts of energy over a prolonged period of time to systems on a chairlift. The disclosed devices further are capable of rapid charging so that the chairlift can be charged while in use and there is no requirement to take the chairlift out of service. The disclosed devices further have the capacity to power devices with very high energy demands - a feature that has not been available before this disclosure. Aspects of the devices disclosed herein are rapid-charging devices. The devices comprise a first element connected to one or more capacitors. The one or more capacitors are connected to one or more electronic components by a conductive link. Furthermore, the first element, capacitors, and one or more electronic components are positioned on the chairlift, wherein the first element is positioned on a safety bar of the chairlift. These aspects also include a second element, wherein the second element is connected to an electricity source and is positioned at a location other than the chairlift.

In certain embodiments, operation of the one or more electronic components involves the chairlift moving into a proximity of the second element. When the chairlift moves into the proximity of the second element, the first element is operably connected to the second element. By "operably connected," it is meant that the second element is capable of transferring electricity to the first element. In certain embodiments, the second element is a charging coil that transfers electricity to the first element, which is also a charging coil. The transfer of electricity is contactless. In other embodiments, the second element is a member, such as a rail, to which the first element makes contact, which comprises a material that allows for the transfer of electricity when contact is made (as disclosed herein). It should be noted that in embodiments where the first element makes contact with the second element, the first element can be any structure that makes sufficient contact with the second element to allow for the transfer of electricity to the first element.

Aspects of devices disclosed herein include a rapid-charging device for powering one or more electronic components on a chairlift. The device comprises a first charging coil connected to one or more capacitors. The one or more capacitors are connected to one or more electronic components by a conductive link. Furthermore, the first charging coil, capacitors, and one or more electronic components are positioned on the chairlift. These aspects also include a second charging coil, wherein the second charging coil is connected to an electricity source and is positioned at a location other than the chairlift. The first charging coil comes into operative proximity of the second charging coil as the chairlift moves near the location of the second charging coil.

In certain embodiments, the device further comprises a voltage regulator. In other embodiments, the one or more electronic components comprise an electronic multimedia component. In still other embodiments, the electronic multimedia component comprises an electronic visual display.

In particular embodiments, the electronic multimedia component comprises a USB port. In still more particular embodiments, the one or more electronic components each comprise a battery that is connected to the one or more capacitors. In even more particular embodiments, the electronic components are selected from the group consisting of WiFi router, heating element, computer, computer-readable memory, audio system, display, charger, and radio.

In certain embodiments, the one or more capacitors are arranged in series. In some embodiments, the one or more capacitors are connected to one or more lithium batteries. In further embodiments, the one or more capacitors are connected in parallel to the one or more electronic components. In particular embodiments, the second charging coil is located at a base station.

In certain embodiments, the second charging coil is stationary and creates a charging zone in which the first charging coil and second charging coil form an inductive couple when the first charging coil moves into the charging zone. In other embodiments, the first charging coil moves with the chairlift into the charging zone and the one or more capacitors are inductively charged. In still other embodiments, the first charging coil moves with the mobile unit out of the charging zone and into a discharging zone whereby the one or more capacitors discharge by providing power to the one or more electronic components.

In some embodiments, the ratio of time spent by the chairlift in the discharging zone as compared to the charging zone is at least about 5 to 1. In more embodiments, the ratio is at least about 10 to 1. In still more embodiments, the ratio is up to about 100 to 1. In even more embodiments, the electronic media component comprises one or more batteries connected to the one or more capacitors.

In yet more embodiments, the first charging coil and one or more capacitors are positioned on the chairlift mobile in a position in which the first charging coil is stationary. According to the invention, the second element is positioned on the safety bar of the chairlift.

Aspects of devices disclosed herein include a rapid-charging device for powering one or more electronic components on a chairlift.

The device comprises a first element connected to one or more capacitors. The first element comprises a conductive material designed to operably connect with a second element as the second element moves along the distance of the first element. The first element, capacitors, and one or more electronic components are positioned on the chairlift, wherein the first element is positioned on a safety bar of the mobile unit.

The second element is connected to an electrical source and comprises a conductive material. In certain embodiments, the first element is a wiper or brush. In some embodiments, the first element is a brush comprising multiple wipers. In particular embodiments, the second element contacts the first element along a particular linear distance sufficient to allow for the transfer of sufficient electricity to the first element.

In particular embodiments, the first element is a wiper designed to remain engaged with the second element. In more particular embodiments, the second element is a rail to which the mobile unit is attached.

In other embodiments, the second element is selected from the group consisting of a commutator, ring, segment, or bar design.

Aspects disclosed herein include a method of powering one or more electronic components located on a chairlift.

The method comprises attaching a first element to the chairlift and connecting the first element to one or more capacitors. The one or more capacitors are further connected to one or more electronic components on the chairlift The aspects also include attaching a second element to a base station such that the one or more capacitors are charged when the chairlift moves the first element into the base station to be in close proximity to the second element. As used herein, "close proximity" means a proximity sufficient to allow for the transfer of electricity from the second element to the first element. Such proximity can be contactless or contact-based.

In certain embodiments, the methods comprise charging the one or more capacitors when the chairlift moves into the base station and discharging the one or more capacitors to power the one or more electronic components when the chairlift moves from the base station. In some embodiments, the one or more electronic components comprise an electronic multimedia component. In other embodiments, the electronic multimedia component comprises an electronic visual display. In still other embodiments, the electronic multimedia component comprises a USB port.

In certain embodiments, the one or more electronic components each comprise a battery connected to the one or more capacitors. In particular embodiments, the electronic components are selected from the group consisting of WiFi router, heating element, computer, computer-readable memory, audio system, display, charger, and radio. In more particular embodiments, the one or more capacitors are arranged in series. In still more particular embodiments, the one or more capacitors are connected to one or more lithium batteries. In yet more particular embodiments, the one or more capacitors are connected in parallel to the one or more electronic components. methods further comprise moving the chairlift when outside of the base station to allow for providing of power to the one or more electronic components while minimizing the probability that the one or more capacitors will discharge completely prior to entering the base station. In other embodiments, the ratio of time spent by the chairlift outside of the base station as compared to in the base station is up to 5 to 1. In still other embodiments, the ratio is at least about 10 to 1. In particular embodiments, the device is designed to stored enough energy to power the one or more electronic components on the chairlift until the chairlift reaches a base station. In more particular embodiments, the device design takes into account the time spent in the discharging zone and the time spent in the charging zone by a chairlift. Based on the time differential, the device is designed such that the device will charge sufficiently to power the one or more electronic components while the chairlift is in the discharging zone.

In certain embodiments, the electronic media component comprises one or more batteries connected to the one or more capacitors. In particular embodiments, the first charging coil and one or more capacitors are positioned on the chairlift in a position in which the first charging coil is stationary.

### Brief Description Of The Figures

The foregoing and other objects of the disclosed processes and systems, the various features thereof, may be more fully understood from the following description, when read together with the accompanying drawings in which:
Figure 1A is a schematic representation of an embodiment of an illustrative device attached to a chairlift;
Figure 1B is a close-up view of the safety bar of a mobile unit and the multimedia component attached to the safety bar;
Figure 1C is a close-up view of the device within a weather-proof container in close proximity to a charging component;
Figure 2 is a generic flow chart representation of a device connected to an electronic device that is connected to a display;
Figure 3 is a flowchart showing the arrangement of capacitors in series;
Figure 4 is a flowchart showing the arrangement of capacitors in parallel;
Figure 5 shows a series of mobile units acting as a wireless network between base stations that act as charging zones..

### Detailed Description

The patent and scientific literature referred to herein establishes knowledge that is available to those of skill in the art.

### 1. Devices for delivering energy to one or more systems

The disclosed devices deliver energy to one or more systems located on mobile units. As used herein, the term "mobile unit" refers to a chairlift.

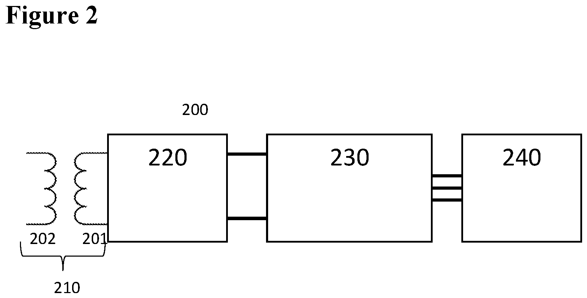

Figure 2 shows a generic representation of some embodiments of the disclosed devices. In Figure 2, the device **200** comprises a charging couple **210** - also known as an inductive couple. In some embodiments, the couple **210** is contactless. An advantage of contactless charging is that it allows for a high number of cycles without degradation in performance. In other embodiments, the device **200** comprises a wiper that makes contact. In certain embodiments, each member of the couple is a coil **201** and **202** that is herein described as a "charging coil." The first charging coil (e.g., charging coil) **201** is connected to an energy storage source **220**. In certain embodiments, the energy storage **220** is one or more capacitors. In other embodiments, the energy storage **220** is one or more capacitors further connected to one or more batteries (e.g., lithium batteries). For instance, super capacitors can be used. Super capacitors allow for rapid charge during short duration when transmitter and receiver are within range. In other embodiments, batteries can be used. As used herein, the terms "a" or "an" means one or more and includes a plurality of the noun that is being modified unless indicated otherwise.

Regarding contact-based electricity transfer, the device **200** comprises first and second elements. The first element **201** can be a wiper or brush. As provided herein, a wiper can be any design that allows for the first element to make contact sufficient to transfer electricity from the second element **202** to the first element **201**. For instance, the first element **201** can be designed to make contact with a rail (i.e., the second element **202**) on which the mobile unit moves. Alternatively, the first element **201** can be designed to fit onto a structure in the base station specifically molded to contact the first element. The structure of the first element **201** can be a bar, roller, flat surface (e.g., plate), block, or any structure.

In additional contact-based embodiments, the first and second elements **201** and **202** can be any conductive material that allows for transfer of electricity from the second element to the first element. Furthermore, the first **201** and second **202** elements can make contact over any particular distance to allow for the transfer of electricity to the first element.

The energy storage unit **220** of the device is connected to one or more electronic components **230**. In particular embodiments, the one or more electronic components **230** are further connected to a display **240**. The electronic components **230** can comprise processors and memory. In particular embodiments, the electronic component **230** is a voltage regulator. In more particular embodiments, the one or more electronic components **230** comprise one or more additional displays and other electronics, which is described more fully below. The display **240** can be a LED, LCD, or other electronic display device. Furthermore, the display **240** is capable of receiving and displaying video content, such as streamed media, mpg files, Adobe^{®} Flash Player files, and any known video technology files.

Figure 2 further shows a second charging coil **202** unconnected to the energy storage **220**. The second charging coil **202** can provide energy to the first charging coil **201** when brought into a proximity of the first charging coil **201**. As used herein, the term "a proximity" or "the proximity" refers to the distance between charging coils that allows for an inductive coupling between the charging coils.

Aspects disclosed herein provide for rapid-charging devices. In certain embodiments, the disclosed devices comprise one or more capacitors that can store a large amount of energy in a relatively short period of time as compared to standard lithium batteries. Examples of capacitors that can store a large amount of energy are super capacitors. Capacitors can be charged at much faster rates than batteries and for 500,000 to 1,000,000 cycles. Although capacitors have energy densities lower than conventional batteries, the amount of capacitance can be selected to meet the requirements of the discharge rate for a given application. Furthermore, capacitors have distinct advantages over batteries that allow for much faster charging in environments where there may not be enough time to charge conventional batteries.

The devices disclosed herein further comprise a first element (e.g., a wiper or charging coil) that is connected to the one or more capacitors. In particular embodiments, the first charging coil is designed to convert an electromagnetic field from a second charging coil into an electrical current. As the first charging coil comes into a proximity to a second charging coil, the first charging coil enters into the electromagnetic field of the second charging coil. The first charging coil converts the electromagnetic field into an electric current that is provided to the capacitors for storage.

In certain embodiments, the second element is located at a base station. As used herein, the term "base station" refers to a location in which one or more second charging coils are located. Base stations can be located at any position where a mobile unit will move a first element into a close proximity to the one or more second elements to allow for the charging of the capacitors. In certain embodiments, base stations are at fixed positions such as in at the ends of ski lifts. Base stations can also be located on poles, towers, rails, or any position that allows the second charging coil to come into a proximity of the first charging coil of the disclosed devices.

Additionally, base stations can be located at multiple positions for access to a mobile unit. For example, there can be a base station located at the bottom of a ski lift such that each chairlift (*i.e.,* mobile unit) comes into close proximity to one or more second elements. There can also be multiple additional base stations located along the ski lift route up the mountain and at the top of the mountain. Thus, there can be a nearly innumerable number of base stations along the route that the chairlifts take.

It should be noted that each base station thus defines a "charging zone." The charging zone is the region in which the first and second elements are in proximity such that the capacitors receive an electric current. Thus, the "charging zone" can be defined by distance or the time spent by a mobile unit in the charging zone. When the mobile unit leaves the close proximity of the second element in the base station, the mobile unit enters the "discharging zone." The discharging zone is the region where the one or more capacitors discharge their stored energy to one or more electronic components located on the mobile unit. As with the charging zone, the "discharging zone" can be defined by distance or the time spent by a mobile unit in the discharging zone.

In some embodiments, the systems disclosed herein comprise a "standby zone." The "standby zone" is a feature in which the mobile unit is in a power down mode to conserve energy. In some embodiments, the standby mode occurs when the mobile unit is empty and the one or more electronic components are in off or power save mode. In other embodiments, the "standby zone" overlaps with the "charging zone" and the capacitors of the device are charged.

In certain contactless embodiments, the first and second charging coils are tuned to resonate at the same frequency. In some embodiments, the device further comprises a resonance transformer. In other embodiments, the second charging coil is configured to generate an oscillating current. In further embodiments, the first and second charging coils resonate to extend the charging zone range.

As would be clear to one of ordinary skill in the art from this disclosure, the time spent in the charging zone can be tailored to the particular requirements of the particular ride. For example, the charging zone can be made large enough such that it is approximately 20 times smaller than discharging zone - establishing a ratio of discharging zone time to charging zone time of 20 to 1. This can be accomplished by placing a certain number of second charging coils in the base station to tailor the range of the charging zone. The ratio can be as low as 1 to 1, 5 to 1, 10 to 1, 20 to 1, 30 to 1, 40 to 1, 50 to 1, 60 to 1, 70 to 1, 80 to 1, 90 to 1, or as high as 100 to 1, 150 to 1, 200 to 1, 250 to 1, 300 to 1, 350 to 1, 400 to 1, 450 to 1, 500 to 1, or even greater. The charging and discharging zone ratios can be defined by the time that a mobile unit spends in each zone and is defined by the speed of the mobile unit set by the operator of the units. For example, a mobile unit can spend 30 seconds in a charging zone and have sufficient power stored in the presently disclosed device to be in the discharging zone for extended periods of time (such as 15 minutes or longer). Another example would be a mobile unit entering a base station and traveling for one minute in the base station charging zone and remaining in the discharging zone for 30 minutes. The only limitation is the number of electronic components on the mobile unit as compared to the number of capacitors provided in a device, as well as the available charging current and the time in the charging zone.

Furthermore, the ratio of time in the charging zone to discharging zone depends on the individual application. One of ordinary skill in the art will recognize that a higher power draw in the discharge zone requires more charging time and/or higher charge currents. The current draw of a capacitor is a function of the total capacitance and the rate of change of the capacitor voltage with respect to time. Thus, a higher rate of change of voltage in the capacitor during charging equates to a higher current requirement

The charging zone to discharging zone ratios depend on the ability of the one or more capacitors to absorb a high current in a short period of time, while discharging the stored energy over a longer period of time. By way of example only, the second charging coil can be connected to a power source that allows the second and first charging coils - when coupled - to transmit about 50 amps, about 100 amps, about 200 amps, or more to a capacitor. This can be accomplished at low voltages of about 5 volts or much higher voltages. In some embodiments, the device comprises one or more capacitors having a maximum voltage for each capacitor is 2.85 volts. Other voltages are possible for each capacitor. For instance, super capacitor have a predetermined maximum voltage that it can tolerate.

For example, when 100 amps at 5 volts is provided to the capacitor, this equates to 500 watts of power stored in the capacitor in a short period of time. However, one of ordinary skill in the art would recognize that the amount of power stored by the capacitors can be any amount that is necessary to provide power to the one or more electronic components during the entirety of the discharging zone. For instance, the device can store from about 10 watts of power to about 1000 watts or more. The amount of energy stored in the device is governed by the number of capacitors and the power source connected to the second charging coil. As used herein, the term "about" means +/- 15% from the absolute number. For example, "about 20" would include from 17 to 23.

It should be noted that capacitors can draw large currents. An empty capacitor looks like a short circuit and will draw very large currents. This current is limited by an inline resistor or a current limited power supply. Once the capacitor begins to charge, the current tapers off until the capacitor reaches the charging voltage. The devices disclosed herein are only limited by the voltage rating of the capacitors (additive in series) and the current capacitor of the charging coils. The current limitation can be with the inductive interface.

Additionally, the period of time required to store the power can be less than about 30 seconds, about 30 seconds, less than about 1 minute, less than about 2 minutes, or a period of time that is allowed by the speed of the mobile unit. The amount of time needed to store the required power is governed by the power requirement of the electronic components on the mobile unit and the length of time that the mobile unit will be in the discharging zone, as well as the current limit of the inductive charging apparatus. As such, the disclosed devices can have a variable number of capacitors to store the required energy and the second charging coil can be connected to a sufficient power source to allow for enough electricity to be provided to the capacitors in the device.

When the device enters the discharging zone, the capacitors of the disclosed devices release the energy at lower currents. For example, a capacitor in the disclosed devices that received about 500 watts can discharge this energy to the one or more electronic components at currents of less than about 10 amps, less than about 5 amps, or about 1 amp at a voltage of about 5 volts. This equates to a power of about 5 watts released to the electronic components on the mobile unit. In such embodiments, the device stores a large amount of energy rapidly while releasing the energy more slowly. In certain embodiments, the devices comprise a voltage regulator to assist in maintaining a consistent voltage. In some embodiments, the one or more capacitors are connected to one or more batteries (*e*.*g*., lithium batteries).

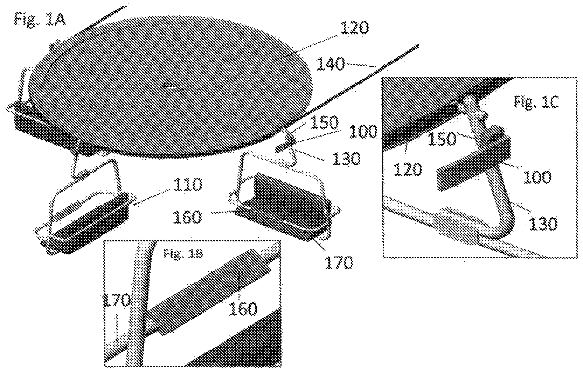

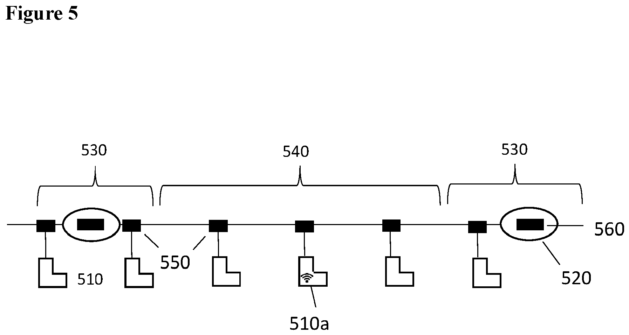

Figure 5 shows an arrangement in which each mobile unit **510** is traveling between base stations **520**. Within the charging zones **530**, the devices shown in Figures 1-3 are located on the mobile units **510**, which are charged within the charging zones **530** by a charging couple as shown in Figure 2, the second element **560** being located each base station **520**. The mobile units **510** enter the discharging zones **540** between base stations. The mobile units **510** can act as mobile ad hoc networks in which the electronic components located on the mobile units **510** can access wireless networks to form ad hoc wireless networks. In some embodiments, the electronic components comprise a wireless access point on one or more mobile units **510a** to allow each mobile unit **510** to access a wireless network.

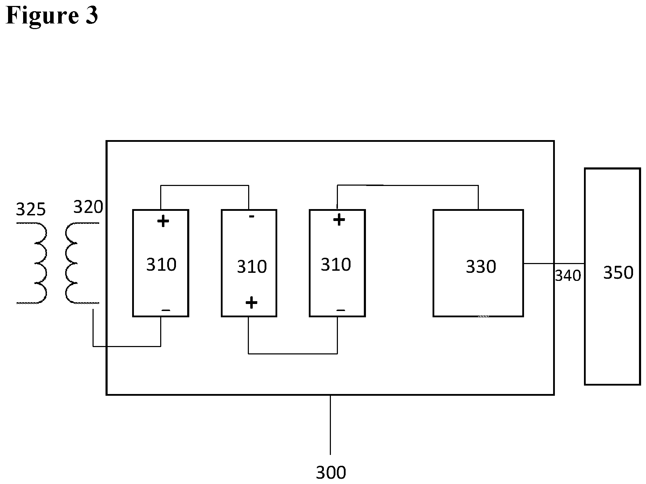

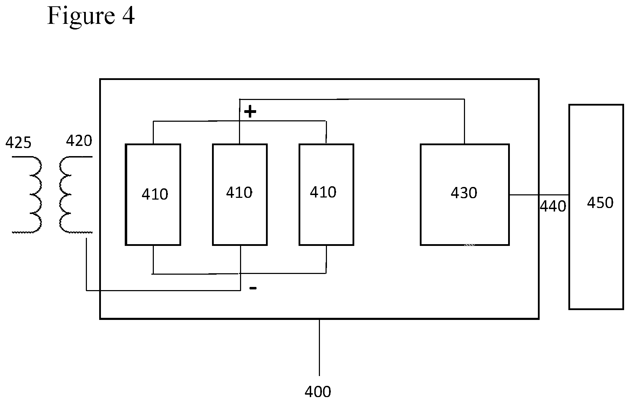

In particular embodiments, the devices comprise a plurality of capacitors that are arranged in series when they are charged. As shown in Figure 3, the capacitors **310** are located within a weather-proof container **300**. The capacitors **310** are arranged in series and through connection **340** provide energy to multimedia component **350**. The capacitors **310** obtain energy through connection to the charging component **320**, which is energized by inductive coupling to charging component **325**. In more particular embodiments, the plurality of capacitors **410** are arranged in parallel to the one or more electronic components **450** and voltage regulator **430** rather than in serial connection (Figure 4). Returning to Figure 3, the capacitors **310** are connected to a voltage regulator **330** in series. The voltage regulator **330** provides consistent voltage to the multimedia component **350** during discharge of the capacitors **310**.

Aspects of the devices disclosed herein comprise the first charging coil and second charging coil that each can comprise a material selected from the group consisting of 6H40, MnZn ferrite core materials, nickel, copper-ferrite core material, ETD-49 core (EPCOS AG), and materials listed in Table 1 below.

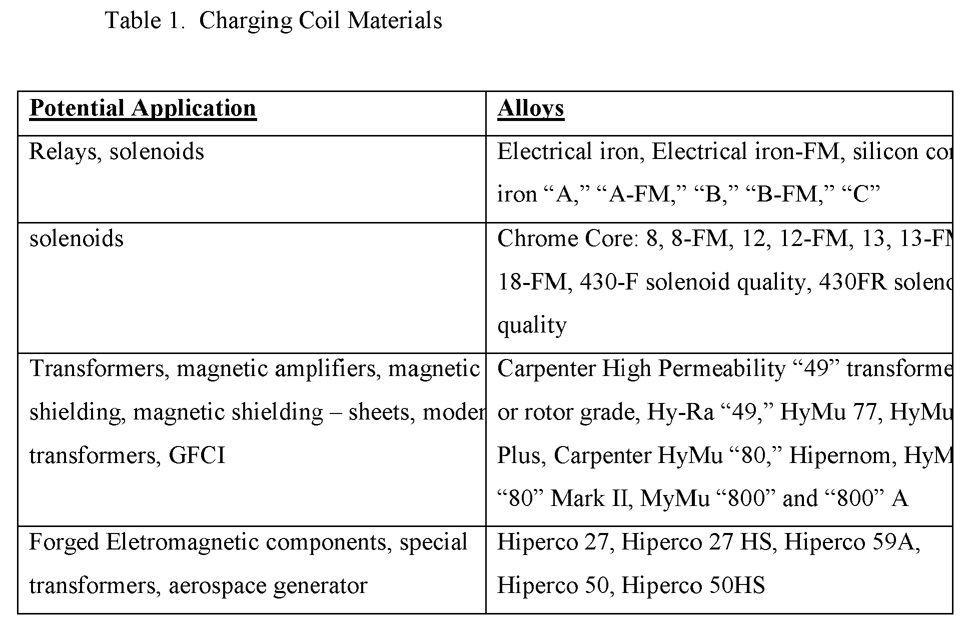

In particular embodiments, the first **201** and second **202** charging coils both comprise the same materials. In other embodiments, the first charging coil **201** comprises a material that is different from the second charging coil **202**. Figure 1A also shows an illustrative embodiment of a device **100** attached to a chairlift **110**. Each chairlift **110** moves into a base station **120**. Each chairlift **110** comprises a device **100** comprising a first charging coil connected to an energy source (*e*.*g*., batteries, capacitors). In certain embodiments, the device **100** comprises a weatherproof container to protect the charging coil and capacitors. As shown in Figure 1A, the device **100** is located on the arm **130** attaching the chairlift **110** to the ski lift line **140**. As the chairlift **110** moves into a proximity of the second charging coil **150** , the first charging coil converts the electromagnetic field of the second charging coil **150** into an electric current that is stored in the capacitors. In particular embodiments, the capacitors provide the stored energy to the electronic multimedia component **160** located on the safety bar **170** of the chairlift **110**.

It should be noted that the device can be located at any position on the mobile unit so long as the position allows the first element to come into a close proximity of the second element to allow for transfer of electricity from the second element to the first element. In certain embodiments, this transfer is performed by contactless transfer such as inductive coupling. The chairlifts **110** of Figure 1 have the device located on the safety bar such that when the bar is lifted to allow the users off the chair, the device comes into a proximity of the one or more second charging coils in the base station.

In particular embodiments, the mobile unit comprises an electronic multimedia component comprising a mounted display. The mounted display can be a high-definition screen such as an LCD, LED, LCD-LED. The display can show images or video, such as streamed video. In other embodiments, the electronic multimedia component comprises a USB port. In particular embodiments, the electronic multimedia component comprises computer-readable memory. Such memory allows for the storage of data such as streaming data, email data, text data, video data, or messaging. In other embodiments, the electronic multimedia component comprises streaming capabilities.

The electronic multimedia component can also comprise WiFi technology, one-way radio, two-way radio, and routers. In certain embodiments, a mobile unit is a wireless access point. In particular embodiments, the mobile unit allows for public service announcements, instant messaging, and advertisements. The presently disclosed devices provide sufficient power to the mobile units to allow for other types of media such as movies, television shows, and other high power-demand content to be shown on a display located on the mobile unit.

In further embodiments, each mobile unit **110** of Figure 1 becomes a WiFi "hot spot." The device **100** provides sufficient power to allow each chairlift **110** to allow users of the chair to access the internet and receive any type of media content. With each chairlift **110** acting as a hot spot, the entire ski lift becomes a WiFi interconnected network that allows users to remain connected to the internet and distribute information from one chair to another. Without the advantages conferred by the presently disclosed devices, the chairlifts **110** would have insufficient power reserves to power this range of devices.

Figure 1B shows a close-up view of the multimedia component **160** attached to the safety bar **170**. The multimedia component **160** in this embodiment is connected to the energy source through connections on the underside of the safety bar **170**. Alternatively, the multimedia component **160** can be connected to the energy source by connections running through the safety bar **170**. There is not particular limitation on the transmission of energy from the energy source to the multimedia component **160** so long as the multimedia component **160** receives the energy in a safe and reliable way.

In certain embodiments, the multimedia component **160** comprises a processor and memory. The memory stores instructions that are executable by the processor. In particular embodiments, the processor executes instructions to show a video or series of images. In other embodiments, the processor executes instructions so as to respond to a command from a user of the multimedia component **160**. For instance, the multimedia component **160** can comprise a touchscreen responsive to a user's commands. In some embodiments, the multimedia component **160** comprises executable instructions allowing users to play videogames, connect with the internet, select media from a library, or connect with devices such as Smartphones or wireless media devices.

Figure 1C shows a close-up view of the device **100** and second charging component **150**. In this embodiment, the second charging component **150** is a charging coils that allows for inductive coupling to the charging coil of the device **100**. The first and second charging components form an inductive couple that allows for the transfer of energy from the second component **150** to the energy source in the device **100**. In other embodiments, a contact is made between the first and second charging components.

The presently disclosed devices can also power other electronic components. Such components comprise seat warmers that remain warm during the entire time that a mobile unit is away from the charging region. Other electronic components include lights, amusement effects such as vibrating components in seats, loudspeakers, speakers, and any type of device that utilizes electricity.

Additionally, the disclosed devices can be used in almost any context in which a chairlift does not have the capacity to power one or more electronic devices without resorting to onboard power storage.

### 2. Methods for delivering energy to one or more systems

Disclosed herein are methods of powering one or more electronic components located on a mobile unit. The methods can comprise the attaching of a first element (e.g., first charging coil or wipers) to a mobile unit. The first element is then connected to an energy storage unit that is also attached to the mobile unit. The first element and the energy storage unit can be located in the same position on the mobile unit or can be attached to different locations on the mobile unit. Additionally, the first element and energy storage unit can be located in a container. In certain embodiments, the container is weatherproof.

Aspects of the methods include attaching a second element (e.g., second charging coil or electrical contact such as a rail) to a base station. The second element is positioned on the base station such that the first element comes into a close proximity of a second element attached to the base station. When the first element comes into close proximity of the second element, the energy storage unit is charged. In certain embodiments, the energy charging unit comprises one or more capacitors such super capacitors.

In particular embodiments, the method includes the discharging of one or more capacitors to power one or more electronic components as the mobile unit moves out of the base station and enters a discharging zone. The one or more capacitors power the one or more electronic components more the energy stored in the one or more capacitors until the mobile unit reaches another base station.

The methods further comprise attaching one or more second elements at each one of multiple positions to allow a mobile unit to come into a close proximity of second elements along the route that the mobile unit takes. In some embodiments, the mobile unit moves through multiple charging zones during as moves along a particular route. In particular embodiments, the mobile unit moves when outside of the base station to allow for providing of power to the one or more electronic components while minimizing the probability that the one or more capacitors will discharge completely prior to entering the base station

In addition, the methods further can comprise connecting the one or more capacitors to one or more batteries (*e*.*g*., lithium batteries). The one or more capacitors can be connected serially to the first charging coil. In some embodiments, the one or more capacitors are connected in parallel to the one or more electronic components.

Aspects of the disclosed methods include providing power to one or more electronic components on a mobile unit in which the mobile unit is one of a plurality of mobile units forming a system. In certain embodiments, each mobile unit communicates with another mobile unit in the system. In other embodiments, each mobile unit allows users riding in the unit to communicate with other users riding in other mobile units in the system. In still other embodiments, each mobile unit comprises a router that allows for the mobile unit to become a WiFi hot spot. In particular embodiments, the mobile units create a WiFi network in the system. In still other embodiments, each mobile unit allows for the streaming of media content to the users riding in the unit and allows for content to be delivered from one mobile unit to another.

Aspects of the methods disclosed herein include mobile units comprising one or more media devices to create a multimedia experience in the system. For instance, each mobile unit can share media content with other mobile units and can store content in computer-readable memory. Each mobile unit in the system can also create an entertainment experience by syncing lights and audio between the mobile units within the system.

As noted herein, the disclosed devices and methods allow for all of these possibilities due to the increased power storage of the disclosed devices, as well as the increased rapidity by which energy can be stored in the device as compared to prior known storage devices. As such, the disclosed device and methods now allow for improved chairlifts that heretofore were restricted due to the power consumption of modern devices. One of ordinary skill in the art will also recognize that the disclosed embodiments are illustrative.

## Claims

1. A chairlift and a rapid-charging device for powering one or more electronic components (230, 450) on the chairlift (110), the device comprising:
a) a first element (201) connected to one or more capacitors (310, 410); wherein the one or more capacitors (310, 410) are connected to one or more electronic components (230, 450) by a conductive link,
wherein the first element (201), capacitors (310, 410), and one or more electronic components (230, 450) are positioned on the chairlift (110) wherein the first element (201) is positioned on a safety bar (170) of the chairlift (110); and
b) a second element (202), wherein the second element (202) is connected to an electricity source and is positioned at a location other than the chairlift (110), wherein the first element (201) comes into close proximity of the second element (202) as the chairlift (110) moves to the location of the second element (202).

2. The chairlift and the device of claim 1, wherein the first element (201) and the second element (202) are each charging coils.

3. The chairlift and the device of claim 1, wherein the first element (201) is a wiper and the second
element (202) is configured to make contact with the first element (201) or wherein the first element (201) is a brush and the second element (202) is configured to make contact with the first element (201) and wherein the second element (202) is a rail.

4. The chairlift and the device of any preceding claim, further comprising a voltage regulator (330, 430).

5. The chairlift and the device of any preceding claim, wherein the one or more electronic components (230, 450) comprise an
electronic multimedia component (350).

6. The chairlift and the device of claim 5, wherein the electronic multimedia component (350) comprises an electronic visual display and/or wherein the electronic media component comprises one or more batteries connected to the one or more capacitors (310, 410).

7. The chairlift and the device of claim 5 or 6, wherein the electronic multimedia component (350) comprises a USB port.

8. The chairlift and the device of any preceding claim, wherein the one or more electronic components each comprise a battery that is connected to the one or more capacitors (310, 410) and the electronic components (230, 450) are selected from the group consisting of WiFi router, heating element, computer, computer-readable memory, audio system, display, charger, and radio.

9. The chairlift and the device of any preceding claim, wherein the one or more capacitors (310, 410) are arranged in series or wherein the one or more capacitors (310, 410) are connected in parallel to the one or more electronic components (230, 450).

10. The chairlift and the device of any preceding claim, wherein the one or more capacitors (310, 410) are connected to one or more lithium batteries.

11. The chairlift and the device of any preceding claim, wherein the second element (202) is located at a base station and/or wherein the second element (202) is stationary and creates a charging zone in which the first element (201) and second element (202) come into close proximity to allow the second element (202) to transfer electricity to the first element (201) moves into the charging zone.

12. The chairlift and the device of claim 11, wherein the first element (201) moves with the chairlift (110) into the charging zone and the one or more capacitors (310, 410) are charged and wherein the first element (201) moves with the chairlift (110) out of the charging zone and into a discharging zone whereby the one or more capacitors (310, 410) discharge by providing power to the one or more electronic components (230, 450).

13. A method of powering one or more electronic components (230, 450) located on a chairlift (110), the method comprising:
a) attaching a first element (201) to a safety bar (170) of the chairlift (110);
b) connecting the first element (201) to one or more capacitors (310, 410), wherein the one or more capacitors (310, 410) are further connected to one or more electronic components (230, 450) on the chairlift (110);
c) attaching a second element (202) to a base station such that the one or more capacitors (310, 410) are charged when the chairlift (110) moves the first element (201) into the base station to be in close proximity to the second element (202);
d) charging the one or more capacitors (310, 410) when the chairlift (110) moves into the base station; and
e) discharging the one or more capacitors (310, 410) to power the one or more electronic components (230, 450) when the chairlift (110) moves from the base station.

14. The method of claim 13, wherein the first element (201) and the second element (202) are each charging coils or wherein the first element (201) is a wiper and the second element (202) is configured to make contact with the first element (201) or wherein the first element (201) is a brush and the second element (202) is configured to make contact with the first element (201) and wherein the second element (202) is a rail.

## Patentansprüche

1. Sessellift und Schnellladevorrichtung zum Versorgen einer oder mehrerer elektronischer Komponenten (230, 450) an dem Sessellift (110), die Vorrichtung umfassend:
a) ein erstes Element (201), das mit einem oder mehreren Kondensatoren (310, 410) verbunden ist; wobei der eine oder die mehreren Kondensatoren (310, 410) durch eine leitende Verbindung mit einem oder mehreren elektronischen Komponenten (230, 450) verbunden sind, wobei das erste Element (201), die Kondensatoren (310, 410) und eine oder die mehreren elektronischen Komponenten (230, 450) an dem Sessellift (110) positioniert sind, wobei das erste Element (201) an einem Sicherheitsbügel (170) des Sessellifts (110) angeordnet ist; und
b) ein zweites Element (202), wobei das zweite Element (202) mit einer Stromquelle verbunden ist und an einer anderen Stelle als dem Sessellift (110) positioniert ist, wobei das erste Element (201) in unmittelbare Nähe des zweiten Elements (202) kommt, wenn sich der Sessellift (110) zu der Stelle des zweiten Elements (202) bewegt.

2. Sessellift und Vorrichtung nach Anspruch 1, wobei das erste Element (201) und das zweite Element (202) jeweils Ladespulen sind.

3. Sessellift und Vorrichtung nach Anspruch 1, wobei das erste Element (201) ein Wischer ist und das zweite Element (202) konfiguriert ist, um mit dem ersten Element (201) in Kontakt zu kommen, oder wobei das erste Element (201) eine Bürste ist und das zweite Element (202) konfiguriert ist, um mit dem ersten Element (201) in Kontakt zu kommen, und wobei das zweite Element (202) eine Schiene ist.

4. Sessellift und Vorrichtung nach einem vorherigen Anspruch, ferner umfassend einen Spannungsregler (330, 430).

5. Sessellift und Vorrichtung nach einem vorherigen Anspruch, wobei die eine oder die mehreren elektronischen Komponenten (230, 450) eine elektronische Multimediakomponente (350) umfassen.

6. Sessellift und Vorrichtung nach Anspruch 5, wobei die elektronische Multimediakomponente (350) eine elektronische Bildanzeige umfasst und/oder wobei die elektronische Medienkomponente eine oder mehrere Batterien umfasst, die mit dem einen oder den mehreren Kondensatoren (310, 410) verbunden sind.

7. Sessellift und Vorrichtung nach Anspruch 5 oder 6, wobei die elektronische Multimediakomponente (350) einen USB-Anschluss umfasst.

8. Sessellift und Vorrichtung nach einem vorherigen Anspruch, wobei die eine oder die mehreren elektronischen Komponenten jeweils eine Batterie umfassen, die mit dem einen oder den mehreren Kondensatoren (310, 410) verbunden ist, und die elektronischen Komponenten (230, 450) ausgewählt sind aus der Gruppe, bestehend aus WiFi-Router, Heizelement, Computer, computerlesbarem Speicher, Audiosystem, Anzeige, Ladegerät und Radio.

9. Sessellift und die Vorrichtung nach einem vorherigen Anspruch, wobei der eine oder die mehreren Kondensatoren (310, 410) in Reihe angeordnet sind oder wobei der eine oder die mehreren Kondensatoren (310, 410) parallel zu dem einen oder den mehreren elektronischen Komponenten (230, 450) geschaltet sind.

10. Sessellift und Vorrichtung nach einem vorherigen Anspruch, wobei der eine oder die mehreren Kondensatoren (310, 410) mit einer oder mehreren Lithiumbatterien verbunden sind.

11. Sessellift und Vorrichtung nach einem vorherigen Anspruch, wobei sich das zweite Element (202) an einer Basisstation befindet und/oder wobei das zweite Element (202) stationär ist und eine Ladezone erzeugt, in der das erste Element (201) und das zweite Element (202) in unmittelbare Nähe kommen, um dem zweiten Element (202) zu ermöglichen, Strom auf das erste Element (201) zu übertragen, das sich in die Ladezone bewegt.

12. Sessellift und Vorrichtung nach Anspruch 11, wobei sich das erste Element (201) mit dem Sessellift (110) in die Ladezone bewegt und der eine oder die mehreren Kondensatoren (310, 410) geladen werden, und wobei sich das erste Element (201) mit dem Sessellift (110) aus der Ladezone heraus und in eine Entladezone bewegt, wodurch sich der eine oder die mehreren Kondensatoren (310, 410) entladen, indem sie den einen oder die mehreren elektronischen Komponenten (230, 450) mit Strom versorgen.

13. Verfahren zum Betreiben einer oder mehrerer elektronischer Komponenten (230, 450), die sich an einem Sessellift (110) befinden, das Verfahren umfassend:
a) Anbringen eines ersten Elements (201) an einem Sicherheitsbügel (170) des Sessellifts (110);
b) Verbinden des ersten Elements (201) mit einem oder mehreren Kondensatoren (310, 410), wobei der eine oder die mehreren Kondensatoren (310, 410) ferner mit einem oder mehreren elektronischen Komponenten (230, 450) an dem Sessellift (110) verbunden sind;
c) Anbringen eines zweiten Elements (202) an einer Basisstation, sodass der eine oder die mehreren Kondensatoren (310, 410) aufgeladen werden, wenn der Sessellift (110) das erste Element (201) in die Basisstation bewegt, um in enger Nähe zu dem zweiten Element (202) zu sein;
d) Aufladen des einen oder der mehreren Kondensatoren (310, 410), wenn sich der Sessellift (110) in die Basisstation bewegt; und
e) Entladen des einen oder der mehreren Kondensatoren (310, 410), um die eine oder die mehreren elektronischen Komponenten (230, 450) mit Strom zu versorgen, wenn sich der Sessellift (110) aus der Basisstation bewegt.

14. Verfahren nach Anspruch 13, wobei das erste Element (201) und das zweite Element (202) jeweils Ladespulen sind oder wobei das erste Element (201) ein Wischer ist und das zweite Element (202) so konfiguriert ist, um mit dem ersten Element (201) in Kontakt zu kommen, oder wobei das erste Element (201) eine Bürste ist und das zweite Element (202) konfiguriert ist, um mit dem ersten Element (201) in Kontakt zu kommen, und wobei das zweite Element (202) eine Schiene ist.

## Revendications

1. Télésiège et un dispositif de recharge rapide destiné à alimenter un ou plusieurs composants électroniques (230, 450)
sur le télésiège (110), le dispositif comprenant :
a) un premier élément (201) raccordé à un ou plusieurs condensateurs (310, 410) ; ledit ou lesdits condensateurs (310, 410) étant raccordés à un ou plusieurs composants électroniques (230, 450) par une liaison conductrice,
ledit premier élément (201), lesdits condensateurs (310, 410) et un ou plusieurs composants électroniques (230, 450) étant positionnés sur le télésiège (110), ledit premier élément (201) étant positionné sur une barre de sécurité (170) du télésiège (110) ; et
b) un second élément (202), ledit second élément (202) étant raccordé à une source d'électricité et étant positionné au niveau d'un emplacement autre que le télésiège (110), ledit premier élément (201) venant à proximité immédiate du second élément (202) tandis que le télésiège (110) se déplace vers l'emplacement du second élément (202).

2. Télésiège et dispositif selon la revendication 1, ledit premier élément (201) et ledit second élément (202) étant chacun des bobines de charge.

3. Télésiège et dispositif selon la revendication 1, ledit premier élément (201) étant un balai et ledit second élément (202) étant conçu pour entrer en contact avec le premier élément (201) ou ledit premier élément (201) étant une brosse et ledit second élément (202) étant conçu pour entrer en contact avec le premier élément (201) et ledit second élément (202) étant un rail.

4. Télésiège et dispositif selon une quelconque revendication précédente, comprenant en outre un régulateur de tension (330, 430).

5. Télésiège et dispositif selon une quelconque revendication précédente, ledit ou lesdits composants électroniques (230, 450) comprenant un composant multimédia électronique (350).

6. Télésiège et dispositif selon la revendication 5, ledit composant multimédia électronique (350) comprenant un dispositif d'affichage visuel électronique et/ou ledit composant multimédia électronique comprenant une ou plusieurs batteries raccordées au ou aux condensateurs (310, 410).

7. Télésiège et dispositif selon la revendication 5 ou 6, ledit composant multimédia électronique (350) comprenant un port USB.

8. Télésiège et dispositif selon une quelconque revendication précédente, ledit ou lesdits composants électroniques comprenant chacun une batterie qui est raccordée au ou aux condensateurs (310, 410) et lesdits composants électroniques (230, 450) étant sélectionnés dans le groupe constitué par un routeur WiFi, un élément chauffant, un ordinateur, une mémoire lisible par ordinateur, un système audio, un dispositif d'affichage, un chargeur et une radio.

9. Télésiège et dispositif selon une quelconque revendication précédente, ledit ou lesdits condensateurs (310, 410) étant agencés en série ou ledit ou lesdits condensateurs (310, 410) étant raccordés en parallèle au ou aux composants électroniques (230, 450).

10. Télésiège et dispositif selon une quelconque revendication précédente, ledit ou lesdits condensateurs (310, 410) étant raccordés à une ou plusieurs batteries au lithium.

11. Télésiège et dispositif selon une quelconque revendication précédente, ledit second élément (202) étant situé au niveau d'une station de base et/ou ledit second élément (202) étant immobile et créant une zone de charge dans laquelle le premier élément (201) et le second élément (202) viennent à proximité immédiate pour permettre au second élément (202) de transférer de l'électricité au premier élément (201) se déplaçant dans la zone de charge.

12. Télésiège et dispositif selon la revendication 11, ledit premier élément (201) se déplaçant avec le télésiège (110) dans la zone de charge et ledit ou lesdits condensateurs (310, 410) étant chargés et
ledit premier élément (201) se déplaçant avec le télésiège (110) hors de la zone de charge et dans une zone de décharge moyennant quoi le ou les condensateurs (310, 410) se déchargent en fournissant une puissance au ou aux composants électroniques (230, 450).

13. Procédé d'alimentation d'un ou plusieurs composants électroniques (230, 450) situés sur un télésiège (110), le procédé comprenant :
a) la fixation d'un premier élément (201) à une barre de sécurité (170) du télésiège (110) ;
b) le raccordement du premier élément (201) à un ou plusieurs condensateurs (310, 410), ledit ou lesdits condensateurs (310, 410) étant en outre raccordés à un ou plusieurs composants électroniques (230, 450) sur le télésiège (110) ;
c) la fixation d'un second élément (202) à une station de base de sorte que le ou les condensateurs (310, 410) soient chargés lorsque le télésiège (110) déplace le premier élément (201) dans la station de base pour être à proximité immédiate du second élément (202) ;
d) le chargement du ou des condensateurs (310, 410) lorsque le télésiège (110) se déplace dans la station de base ; et
e) le déchargement du ou des condensateurs (310, 410) pour alimenter le ou les composants électroniques (230, 450) lorsque le télésiège (110) se déplace à partir de la station de base.

14. Procédé selon la revendication 13, ledit premier élément (201) et ledit second élément (202) étant chacun des bobines de charge ou ledit premier élément (201) étant un balai et ledit second élément (202) étant conçu pour entrer en contact avec le premier élément (201) ou ledit premier élément (201) étant une brosse et ledit second élément (202) étant conçu pour entrer en contact avec le premier élément (201) et ledit second élément (202) étant un rail.
